# EUROPÄISCHE PATENTSCHRIFT

(11) **EP 4 557 024 B1**
(45) Veröffentlichungstag und Bekanntmachung des Hinweises auf die Patenterteilung: **12.08.2026**
(21) Anmeldenummer: 23210792.0
(22) Anmeldetag: 20.11.2023
(51) Int. Cl.: G05B 19/05, G05B 9/02

(54) **VERFAHREN ZUM BETREIBEN EINER STEUERUNGS-SOFTWARE UND ANORDNUNG MIT EINEM RECHNERSYSTEM**
METHOD FOR OPERATING A CONTROL SOFTWARE AND ARRANGEMENT WITH A COMPUTER SYSTEM
PROCÉDÉ DE FONCTIONNEMENT D'UN LOGICIEL DE COMMANDE ET DISPOSITIF DOTÉ D'UN SYSTÈME INFORMATIQUE

(43) Veröffentlichungstag der Anmeldung: 21.05.2025
(73) Patentinhaber: Siemens Aktiengesellschaft, 80333 München (DE)
(72) Erfinder: Hog, Ronny, 92245 Kümmersbruck (DE); Schweiger, Julia, 92242 Hirschau (DE); Schötz, Sebastian, 92256 Hahnbach (DE); Walter, Markus, 96050 Bamberg (DE)
(74) Vertreter: Siemens Patent Attorneys

(56) Entgegenhaltungen:
- WO-A1-2020/038626
- US-A1- 2023 288 881

## Beschreibung

Heute gängige Steuerungen basieren auf einer Hardwareplattform, einen speziellen elektronischen Unterbau, nämlich eine Speicherprogrammierbare Steuerung (SPS). Wenn neuerdings von virtuellen Steuerungen oder Softwaresteuerungen die Rede ist, so ist dafür ebenfalls eine Hardware zur Ausführung erforderlich, aber die Hardware kann jetzt komplett abstrahiert sein. Dies bedeutet, dass die ausgeführte Soft-SPS nicht mehr wissen muss, auf welchem Gerät sie läuft.

Diese Geräte können nach wie vor dedizierte Steuerungsgeräte sein, wie multifunktionale Steuerungsplattformen oder Industrie-PCs, oder aber Edge-Computing-Plattformen, diese sind immer häufiger in Steuerungsnetzwerken von Maschinen- und Anlagenbetreibern zu finden, oder es werden sogar Cloud-Computing-Plattformen genutzt. Entscheidend ist die Abstraktion der Hardware durch Container oder Hypervisor. Darauf wird die Soft-SPS mit Standardmitteln »deployed« beziehungsweise per Tool orchestriert - eine Installation wie bei der softwarebasierten Steuerung entfällt.

Die Erfindung liegt auf dem Fachgebiet von sicherheitsgerichteten Steuerungen, insbesondere als Software. Speicherprogrammierbare Steuerungen müssen gemäß den Anforderungen der Norm EN 61508 derart ausgestaltet sein, dass sie eine funktionale Sicherheit erfüllen. Bei sicherheitsbezogenen Systemen, wie speicherprogrammierbare Steuerungen für kritische Prozesse, die elektrische, elektronische oder programmierbare elektronische Komponenten enthalten und deren Ausfall ein maßgebliches Risiko für Mensch oder Umwelt bedeutet, müssen diese für eine besondere Gewährleistung der Sicherheit ausgestaltet sein. Als Beispiele für Anwendungen, welche eine erhöhte Sicherheit erfordern, sind folgende zu nennen: Kernkraftwerke, Leittechnik für Systeme mit sicherheitstechnischer Bedeutung, Bahnanwendungen, Telekommunikationstechnik, Signaltechnik und Datenverarbeitungssysteme, chemische Prozesse, aber auch beispielsweise kleine Anlagen wie eine Stanze zum Ausstanzen von Blechteilen.

Bei aktuellen Sicherheitssteuerungen (z.B. SIMATIC S7-1511 F) muss beim Anlauf nach einem Netz aus/ein bzw. Stop/Run Übergang sichergestellt werden, dass die Sicherheitssteuerung mit dem aktuellen und gültigen Sicherheitsprogramm anläuft. Da bei speziellen Fehlersicheren SPS als Einzelgerät, deren Entwicklung und somit der Hardwareaufbau in der Verantwortung des Herstellers liegt, konnte der Fehler durch entsprechende Prüfungen der Firmware, welche direkten Zugriff auf die Hardware und somit auf den Ladespeicher hat, bei einem Fehlverhalten aufgedeckt werden.

In der EP 2 284 771 B1 und in der EP 2 241 953 B1 werden bereits Sicherheitssteuerungen behandelt.

US2023/288881A1 beschreibt ein Verfahren zum Betreiben einer Steuerungs-Software zur Steuerung eines Prozesses wobei ein Sicherheitsprogramm in der Steuerungssoftware in einer nicht-sicher Umgebung sicher ablaufen soll.

WO2020/038626A1 beschreibt ein Verfahren zum Betreiben einer Steuerungs-Software zur Steuerung eines sicherheitskritischen Prozesses.

Die Erfindung betrifft ein Verfahren zum Betreiben einer Steuerungs-Software zur Steuerung eines Prozesses, wobei die Steuerungs-Software innerhalb einer Laufzeit-Umgebung auf einem Rechnersystem zum Ablauf gebracht wird, und ein Sicherheitsprogramm zum Ablauf in der Steuerungs-Software in einen Ladespeicher geladen wird.

Es ist eine Aufgabe der vorliegenden Erfindung zu gewährleisten, dass auch mit einer virtuellen Steuerung das richtige Sicherheitsprogramm in der Steuerungs-Software zum Ablauf gebracht wird.

Die Aufgabe wird dadurch gelöst, dass eine Prüfsumme des Programmcodes des Sicherheitsprogramms in einem mit dem Rechnersystem über ein Kommunikationsnetzwerk verbundenen Netzwerkteilnehmer abgelegt wird, wobei bei einem Hochlauf der Steuerungs-Software in der Laufzeit-Umgebung über dem im Ladespeicher abgelegten Programmcode des Sicherheitsprogramms eine Ladespeicher-Prüfsumme erzeugt wird, weiterhin wird von dem Netzwerkteilnehmer die zuvor abgelegte Prüfsumme abgefragt und mit der Ladespeicher-Prüfsumme verglichen, wobei bei einer Ungleichheit eine Abarbeitung des Sicherheitsprogramms in der Steuerungs-Software gestoppt wird.

Im Sinne der Erfindung ist unter Laufzeitumgebung eine Ausführungsumgebung oder eine Ablaufumgebung für wiederum andere Programme oder Apps zu verstehen. Die Laufzeitumgebung stellt dann eine Plattform für das jeweilige Programm dar und lässt dieses auf der Plattform ablaufen, für welche die Laufzeitumgebung gemacht worden ist. Und dies kann irgendwo auf einer beliebigen virtuellen Maschine durchgeführt werden.

Nach dem Download des Sicherheitsprogramms auf eine hardwareunabhängige Sicherheitssteuerung, also zum Beispiel auf eine virtuelle Maschine, wird ein Mechanismus angestoßen, der die Prüfsumme über das Kommunikationsnetzwerk auf einen anderen Netzwerkteilnehmer ablegt. Die Laufzeit-Umgebung, welche als die klassische Firmware in der zuvor genutzten singulären Hardware anzusehen ist, ist nun ausgestaltet über das Kommunikationsnetzwerk von dem verbundenen Netzwerkteilnehmer die Prüfsumme zu erfragen. Der mögliche Fehler, das auf einer virtuellen Steuerung nicht das aktuelle Sicherheitsprogramm abläuft, kann nun abgesichert werden, weil die Prüfsumme von einem Ort abgeholt wird, der vorher festgelegt wurde.

Dabei ist es entscheidend, dass die Einheit, welche den späteren Vergleich der Prüfsummen macht, Kenntnis über den Ablageort hat.

Weiterhin sind im Sinne der Erfindung unter Prüfsummen Werte zu verstehen, die vor und nach der Übertragung aus den übertragenen Daten selbst erzeugt werden. Sie dienen zur Erkennung von Verfälschungen der Daten.

Um eine maximale Flexibilität zu erreichen, werden verfahrensgemäß von der Laufzeit-Umgebung auf dem Rechnersystem oder auf weiteren Rechnersystemen Instanzen erzeugt, auf denen jeweils eine Steuerungs-Software zur Steuerung eines Prozesses zum Ablauf gebracht werden, und jeweils ein Sicherheitsprogramm zum Ablauf in der jeweiligen Steuerungs-Software in einen der jeweiligen Instanz zugeordneten Ladespeicher geladen wird, wobei ein Dienstprogramm betrieben wird, welches eine Ablage der jeweiligen Prüfsummen der jeweiligen Programmcodes der jeweiligen Sicherheitsprogramme verwaltet, wobei bei einem Hochlauf der jeweiligen Steuerungs-Software in der jeweiligen Instanz über das Dienstprogramm die jeweiligen Prüfsumme angefragt wird und in der jeweiligen Instanz wird über den im zugehörigen Ladespeicher abgelegten Programmcode des jeweiligen Sicherheitsprogramms) eine Ladespeicher-Prüfsumme erzeugt, und mit der über das Dienstprogramm abgefragten Prüfsummen verglichen, wobei bei einer Ungleichheit eine Abarbeitung des jeweiligen Sicherheitsprogramms in der jeweiligen Steuerungs-Software gestoppt wird.

Vorteilhafterweise werden im Dienstprogramm bei der Verwaltung von Prüfsummen von mehreren Programmcodes der jeweiligen Sicherheitsprogramme für die jeweilige Steuerungs-Software eine eindeutige Identifikations-Nummer verwendet.

Dies hat den Vorteil, dass wenn mehrere Sicherheitssteuerungs-Instanzen abgelegt werden sollen, zusätzlich zur Prüfsumme eine eindeutige ID (z. B. eine Seriennummer) abgelegt wird. Wichtig ist auch, dass die Speicher der Sicherheitssteuerung und des Dienstprogramms voneinander unabhängig sind.

Wenn die Instanz der Sicherheitssteuerung hochläuft, wird die abgelegte Prüfsumme (ggf. mit ID) im Dienstprogramms abgefragt. Anschließend wird durch die Firmware der Sicherheitssteuerung über das gesamte Sicherheitsprogramm im Ladespeicher, eine Prüfsumme gebildet und mit der zurückgegebenen Prüfsumme verglichen. Nur bei Gleichheit wird die Ausführung des Sicherheitsprogramms fortgeführt. Ansonsten wird die Ausführung gestoppt.

Für eine weitere Absicherung, insbesondere falls der ausgewählte Netzwerkteilnehmer nicht erreichbar sein sollte, ist es von Vorteil, wenn die Prüfsumme des Programmcodes des Sicherheitsprogramms kopiert wird und eine Redundante Ablage eingerichtet wird und über das Kommunikationsnetzwerk wird die Prüfsumme (FCC-con) bzw. eine Prüfsummen-Kopie (FCC'-con) auf unterschiedliche Netzwerkteilnehmer abgelegt.

Der Betrieb des Rechnersystem als eine multifunktionale Steuerungsplattforme oder als ein Industrie-PC oder als eine Edge-Computing-Plattform oder als eine Cloud-Computing-Plattform erhöht die Flexibilität nochmal um ein Vielfaches.

Ein Projekteur oder ein Inbetriebsetzer einer industriellen Anlage, kann sich nun mit einem Engineering-System zum Herunterladen des Sicherheitsprogramms mit dem Rechnersystem verbinden, das Ablegen der Prüfsumme des Programmcodes des Sicherheitsprogramms kann dann entweder durch das Engineering-System oder durch die Laufzeit-Umgebung durchgeführt werden.

Um eine Sicherheit für Mensch und Maschine garantieren zu können, wird die Steuerungs-Software mit dem Sicherheitsprogramm zur Steuerung eines Prozesses, als eine auf funktionale Sicherheit ausgelegte Steuerung betrieben, und in der Steuerungs-Software werden mit dem Sicherheitsprogramm Sicherheitsbausteine betrieben, um die von der Steuerungs-Software für die funktionale Sicherheit geforderten Abläufe zu gewährleisten.

Auch wird die Aufgabe durch eine Anordnung gelöst, dabei weist diese ein Rechnersystem auf umfassend eine Laufzeit-Umgebung ausgestaltet eine Steuerungs-Software zur Steuerung eines Prozesses ablaufen zu lassen, einen Ladespeicher ausgestaltet ein Sicherheitsprogramm zum Ablauf in der Steuerungs-Software aufzunehmen, einen mit dem Rechnersystem über ein Kommunikationsnetzwerk verbundenen Netzwerkteilnehmer, welcher mit einem Speicherbereich versehen ist, in welchem eine Prüfsumme des Programmcodes des Sicherheitsprogramms abgelegt ist,
ein Programmidentifikations-Mittel, welches ausgestaltet ist bei einem Hochlauf der Steuerungs-Software über dem im Ladespeicher abgelegten Programmcode des Sicherheitsprogramms eine Ladespeicher-Prüfsumme zu erzeugen und die in dem Netzwerkteilnehmer zuvor abgelegte Prüfsumme abzufragen und mit der Ladespeicher-Prüfsumme zu verglichen, weiterhin ausgestaltet bei einer Ungleichheit ein Fehlersignal auszugeben, welches eine Abarbeitung des Sicherheitsprogramms in der Steuerungs-Software stoppt.

Bisher konnten fehlersichere speicherprogrammierbare Steuerungen nur auf dedizierter Hardware ausgeführt werden. Durch die Einführung dieser Lösung ist es möglich auf jeder vernetzten Hardware die Ausführung einer fehlersicheren SPS zu gewährleisten.

Um unterschiedliche Teilaufgaben oder Teilprozesse zu automatisieren weist die Anordnung eine erste Instanz von der Laufzeit-Umgebung auf dem Rechnersystem und eine zweite Instanz von der Laufzeit-Umgebung auf dem Rechnersystem oder auf einem weiteren Rechnersystem auf, die Instanzen sind ausgestaltet jeweils eine Steuerungs-Software zur Steuerung eines Prozesses aufzunehmen, in denen wiederum jeweils ein Sicherheitsprogramm ladbar ist, weiterhin aufweisend einen ersten Ladespeicher und einen zweiten Ladespeicher in denen die jeweilige Steuerungs-Software geladen ist, wobei die Laufzeit-Umgebung bzw. dessen Instanzen ausgestaltet ist/sind bei einem Hochlauf die Sicherheitsprogramme in die Steuerungs-Software zu laden, weiterhin aufweisend ein Dienstprogramm, welches ausgestaltet ist eine Ablage der jeweiligen Prüfsummen der jeweiligen Programmcodes der jeweiligen Sicherheitsprogramme zu verwalten, weiterhin ausgestaltet bei einem Hochlauf der jeweiligen Steuerungs-Software in der jeweiligen Instanz die jeweiligen Prüfsumme anzufragen, die jeweiligen Instanzen sind ausgestaltet über den im zugehörigen Ladespeicher abgelegten Programmcode des jeweiligen Sicherheitsprogramms eine Ladespeicher-Prüfsumme zu erzeugen, und mit der über das Dienstprogramm abgefragten Prüfsumme zu vergleichen, wobei bei einer Ungleichheit eine Abarbeitung des jeweiligen Sicherheitsprogramms in der jeweiligen Steuerungs-Software gestoppt wird.

In der Anordnung ist ein Dienstprogramm ausgestaltet ist bei der Verwaltung von Prüfsummen von mehreren Programmcodes dem jeweiligen Sicherheitsprogramme für die jeweilige Steuerungs-Software eine eindeutige Identifikations-Nummer zuzuordnen.

Wenn Sicherheitssteuerungs-Instanzen abgelegt werden sollen, muss zusätzlich zur Prüfsumme eine eindeutige ID (z. B. Seriennummer) abgelegt werden. Die Speicher der Sicherheitssteuerung und des Dienstprogramms, welches als Speicherservice dienen kann, müssen voneinander unabhängig sein.

Wenn die Instanz der Sicherheitssteuerung hochläuft, wird die abgelegte Prüfsumme (ggf. mit ID) im Speicherservice abgefragt. Anschließend wird durch die Firmware, also die Laufzeit-Umgebung der Sicherheitssteuerung über das gesamte Sicherheitsprogramm im Ladespeicher, eine Prüfsumme gebildet und mit der zurückgegebenen Prüfsumme verglichen. Nur bei Gleichheit wird die Ausführung des Sicherheitsprogramms fortgeführt. Ansonsten wird die Ausführung gestoppt.

Um die Verfügbarkeit zu erhöhen weist die Anordnung weiterhin eine Redundante Ablage auf, in welche eine Prüfsummen-Kopie der Prüfsumme des Programmcodes des Sicherheitsprogramms ablegbar ist.

Auf vorteilhafte Weise ist das Rechnersystem ausgestaltet als eine multifunktionale Steuerungsplattformen oder als ein Industrie-PCs oder als eine Edge-Computing-Plattform oder als eine Cloud-Computing-Plattformen.

Die Anordnung weist weiterhin ein Engineering-System auf, welches ausgestaltet ist zum Herunterladen des Sicherheitsprogramms und/oder zum Anlegen der Instanzen (A,B) in dem Rechnersystem.

Im Hinblick auf die Erfüllung der funktionalen Sicherheit, ist die Steuerungs-Software mit dem Sicherheitsprogramm zur Steuerung eines Prozesses, als eine auf funktionale Sicherheit ausgelegte Steuerung ausgestaltet und in der Steuerungs-Software mit dem Sicherheitsprogramm sind Sicherheitsbausteine vorhanden, um die von der Steuerungs-Software für die funktionale Sicherheit geforderten Abläufe zu gewährleisten.

Die Übertragung eines Sicherheitsprogramms in den Ladespeicher (z. B. Festplatte) findet meistens über einen Cache statt. Durch einen Software- oder Hardwarefehler, kann es dazu kommen, dass die Übertragung nur in den Cache stattfindet, so dass im Ladespeicher (z.B. Festplatte) unter Umständen ein altes Sicherheitsprogramm vorhanden ist. Nach einem Netz-AUS/EIN wird könnte jedoch wieder das alte Sicherheitsprogramm von der Festplatte in den Cache geladen werden und abgearbeitet werden, wobei dieses Fehlverhalten durch Erfindung vermieden wird.

Die Zeichnung zeigt ein Ausführungsbeispiel der Erfindung, dabei zeigt:
- FIG 1: ein Rechnersystem ausgestaltet zum Ablauf einer Steuerungs-Software,
- FIG 2: ein Programmidentifikations-Mittel, welches in einer Firmware für die Steuerungssoftware abläuft,
- FIG 3: das aus FIG 1 gezeigte Rechnersystem mit einer Instanzbildung von Steuerungssoftwaren bzw. Firmwareinstanzen für die Steuerungssoftware und
- FIG 4: das Erzeugen und Betreiben mehrerer Sicherheitssteuerungs-Instanzen mit der Versorgung über ein Engineering-System.

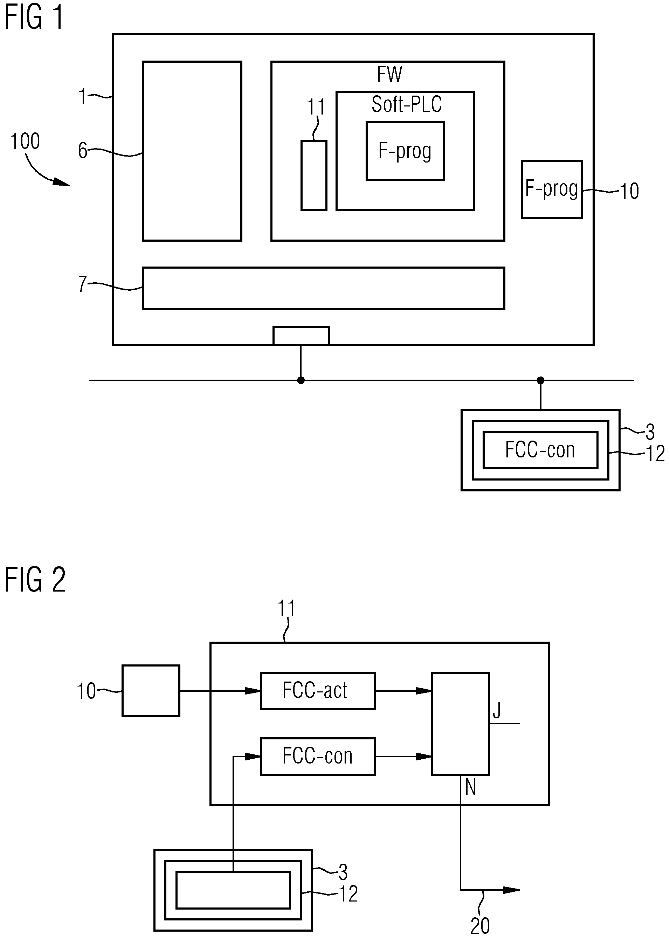

Gemäß FIG 1 ist eine Anordnung 100 aufweisend ein Rechnersystem 1 mit einer Laufzeit-Umgebung FW und einem anderen Betriebssystem 6, welche beide in dem Rechnersystem 1 über einen Hypervisor 7 gemanaged werden. Die Laufzweit-Umgebung FW ist ausgestaltet, eine Steuerungs-Software Soft-PLC zur Steuerung eines Prozesses ablaufen zu lassen.

Ein Ladespeicher 10 ist ausgestaltet, ein Sicherheitsprogramm F-Prog zum Ablauf in der Steuerungs-Software Soft-PLC aufzunehmen. Die Laufzeitumgebung FW bildet demnach eine Firmware für eine softwaremäßige speicherprogrammierbare Steuerung innerhalb eines Rechnersystem nach. In der Laufzeitumgebung FW ist die Steuerungs-Software Soft-PLC eingebettet und in der Steuerungs-Software Soft-PLC ist wiederum ein Sicherheitsprogramm F-Prog eingebettet, welches zum Ablauf und zur Steuerung des Prozesses ausgestaltet ist.

Das Rechnersystem 1 ist über ein Kommunikationsnetzwerk 2 mit einem Netzwerkteilnehmer 3 verbunden. Der Netzwerkteilnehmer 3 ist mit einem Speicherbereich 12 versehen, in welchem eine Prüfsumme FCC-con des Programmcodes des Sicherheitsprogramms F-Prog abgelegt werden kann.

Die Laufzeit-Umgebung FW weist ein Programmidentifikations-Mittel 11 auf, welches ausgestaltet ist bei einem Hochlauf der Steuerungs-Software Soft-PLC über dem im Ladespeicher 10 abgelegten Programmcode des Sicherheitsprogramms F-Prog eine Ladespeicher-Prüfsumme FCC-act zu erzeugen. Weiterhin ist das Programmidentifikations-Mittel 11 ausgestaltet, die in dem Netzwerkteilnehmer 3 zuvor abgelegte Prüfsumme FCC-con abzufragen und mit der Ladespeicher-Prüfsumme FCC-act zu vergleichen. Sollte aus dem Vergleich eine Ungleichheit resultieren, so ist das Programmidentifikations-Mittel 11 weiterhin ausgestaltet ein Fehlersignal 20 auszugeben, welches eine Abarbeitung des Sicherheitsprogramms F-Prog in der Steuerungs-Software Soft-PLC stoppt.

Die Übertragung eines Sicherheitsprogramms in den Ladespeicher (z. B. Festplatte) findet meistens über einen Cache statt. Durch einen Software- oder Hardwarefehler kann es dazu kommen, dass die Übertragung nur in den Cache stattfindet, so dass im Ladespeicher 10 (z.B. Festplatte) eventuell ein altes Sicherheitsprogramm vorhanden ist. Ohne das erfindungsgemäße Programmidentifikations-Mittel 11 und die Ablage auf einen weiteren Netzwerkteilnehmer könnte ein Fehler, welcher daraus resultiert, dass im Ladespeicher 10 noch ein altes Programm liegt und damit in dem Cache bei einem Hochlauf ein altes Programm geladen wurde, nicht aufgedeckt werden.

Allgemein kann gesagt werden, dass nach dem Download des Sicherheitsprogramms F-Prog auf eine hardwareunabhängige Sicherheitssteuerung ein Mechanismus, entweder direkt über ein Engineering-System oder über die als Firmware ausgestaltete Laufzeit-Umgebung FW angestoßen wird, der die Prüfsumme über eine Netzwerkkommunikation auf einen anderen Netzwerkteilnehmer 3 ablegt. Wenn dann die Software bzw. die Laufzeit-Umgebung FW mit der Steuerungs-Software Soft-PLC hochläuft, wird die abgelegte Prüfsumme abgefragt und anschließend wird durch die Laufzeit-Umgebung FW über das gesamte Sicherheitsprogramm F-Prog im Ladespeicher eine Prüfsumme gebildet und mit der zurückgegebenen Prüfsumme verglichen. Nur bei Gleichheit wird die Ausführung des Sicherheitsprogramms fortgeführt, ansonsten wird die Ausführung gestoppt.

Mit der FIG 2 wird das mit FIG 1 eingeführte Programmidentifikations-Mittel 11 näher erläutert. Bei einem Programmhochlauf oder beispielsweise nach einem Netz-Aus/Ein lädt das Programmidentifikations-Mittel 11 aus dem Ladespeicher 10 das Sicherheitsprogramm F-Prog und bildet über den gesamten Programmcode des Sicherheitsprogramms F-Prog eine Ladespeicher-Prüfsumme FCC-act. Weiterhin ist das Programmidentifikations-Mittel 11 ausgestaltet, die Prüfsumme FCC-con aus dem Speicherbereich 12 des weiteren Netzwerkteilnehmers 3 abzuholen. Nun liegen eine aktuelle Prüfsumme und die Prüfsumme der Konfiguration im Programmidentifikations-Mittel 11 für einen Vergleich vor. Sollte der Vergleich positiv ausfallen, so wird über ein Ja-Zweig J weiter verfahren. Sollte der Vergleich negativ ausfallen, so wird über einen N-Zweig N ein Fehlersignal 20 generiert. Das Fehlersignal 20 wird dazu genutzt den Hochlauf der Sicherheitsanlage bzw. des Sicherheitsprogramms F-Prog zu stoppen.

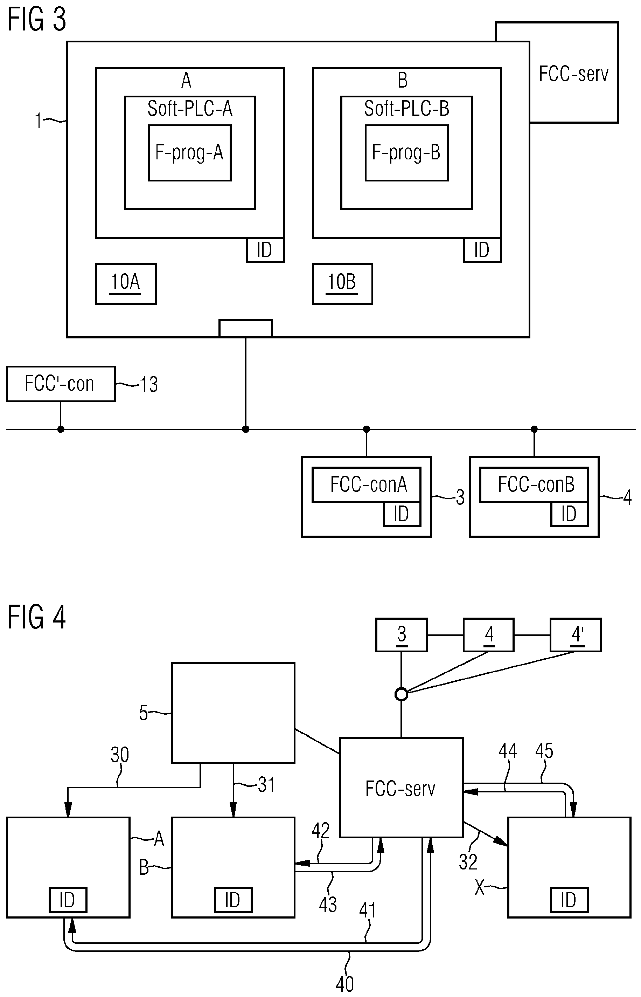

Gemäß FIG 3 ist eine Ausgestaltung des Rechnersystems 1 mit gebildeten Programminstanzen dargestellt. In dem Rechnersystem 1 ist über ein Engineeringsystem 5 (siehe FIG 4) eine erste Instanz A von der Laufzeit-Umgebung FW und eine zweite Instanz B von der Laufzeit-Umgebung FW installiert oder implementiert worden. Die Instanzen A,B sind ausgestaltet jeweils eine Steuerungs-Software Soft-PLC-A,Soft-PLC-B zur Steuerung eines Prozesses aufzunehmen. In den Instanzen A,B bzw. in den Steuerungs-Softwaren Soft-PLC-A auf Soft-PLC-B ist jeweils wiederum ein Sicherheitsprogramm F-Prog-A,F-Prog-B geladen. Dazu weist das Rechnersystem 1 einen ersten Ladespeicher 10A und einen zweiten Ladespeicher 10B auf, in denen die jeweilige Steuerungs-Software Soft-PLC-A,Soft-PLC-B geladen ist.

Die Laufzeit-Umgebung FW bzw. dessen erste Instanz A und dessen zweite Instanz B ist wie mit FIG 2 gezeigt, jeweils mit einem Programmidentifikations-Mittel 11 ausgestaltet.

Es ist ein Dienstprogramm FCC-Serv vorhanden, welches ausgestaltet ist eine Ablage der jeweiligen Prüfsummen FCC-con-A,FCC-con-B der jeweiligen Programmcodes der jeweiligen Sicherheitsprogramme F-Prog-A,F-Prog-B zu verwalten. Hierbei kann entweder das Dienstprogramm FCC-Serv die Prüfaufgabe übernehmen oder das Programmidentifikations-Mittel 11. In jedem Fall wird bei einem Hochlauf der jeweiligen Steuerungs-Software Soft-PLC-A,Soft-PLC-B in der jeweiligen Instanz die jeweilige Prüfsumme FCC-con-A,FCC-con-B abgefragt.

Ähnlich wie bei dem Verhalten gemäß FIG 1 sind die jeweiligen Instanzen A,B ausgestaltet, über dem im zugehörigen Ladespeicher 10A,10B abgelegten Programmcode des jeweiligen Sicherheitsprogramms F-Prog-A,F-Prog-B eine Ladespeicherprüfsumme FCC-act-A,FCC-act-B zu erzeugen. Nun kann entweder das Dienstprogramm FCC-serv die abgefragten Prüfsummen FCC-con-A,FCC-con-B mit den aktuellen Prüfsummen FCC-act-A,FCC-act-B vergleichen, aber der Vergleich könnte auch in dem Programmidentifikations-Mittel 11 stattfinden.

Bei der Verwaltung des Dienstprogrammes FCC-serv von mehreren Instanzen und Prüfsummen ist es ratsam, dass jeder Instanz eine Identifikationsnummer-ID zugeordnet ist.

Um eine mögliche Redundanz zu gewährleisten, falls der Netzwerkteilnehmer 3 einmal ausfallen sollte, ist in einem beliebigen weiteren Netzwerkteilnehmer eine redundante Ablage 13 geschaffen. In diese redundante Ablage 13 ist eine Prüfsummen-Kopie FCC'-con der Prüfsumme FCC-con des Programmcodes des Sicherheitsprogramms F-Prog abgelegt und abfragbar.

Mit der FIG 4 wird verdeutlicht, wie über ein Engineering-System 5 Instanzen erzeugt und die Programme downgeloadet werden können. Das Engineering-System 5 hat beispielsweise eine erste Instanz A, eine zweite Instanz B und eine x-te Instanz X erzeugt. Das Engineering-System 5 lädt über einen Download 30 das Sicherheitsprogramm F-Prog-A in die erste Instanz A, über einen Download 31 wird das zweite Sicherheitsprogramm F-Prog-B in die zweite Instanz B geladen und so wird es beliebig fortgeführt bis über einen Download 32 ein x-tes Programm in die x-te Instanz X geladen ist. Jeder Instanz A,B,X ist nun eine eindeutige Identifikationsnummer ID zu geordnet. Das Dienstprogramm FCC-Serv, welches auch als eine beliebige App installiert sein kann, steht wiederum in Verbindung mit einem Netzwerkteilnehmer 3 einen weiteren Netzwerkteilnehmer 4 und einem nochmals weiteren Netzwerkteilnehmer 4'. Auf diesen Netzwerkteilnehmern sind die jeweiligen Prüfsummen abgelegt. Will, beispielsweise die erste Instanz A mit seinem Sicherheitsprogramm hochlaufen, so wird über eine Abfrage 40 der Prüfsumme für die Instanz A bei dem Dienstprogramm FCC-Serv die Prüfsumme angefragt. Das Dienstprogramm FCC-Serv wird über eine Rücklieferung 41 die Prüfsumme an die erste Instanz A zurückliefern und diese kann den Vergleich auf Gleichheit der Prüfsummen durchführen.

Die zweite Instanz B fragt ebenso über eine Abfrage 43 der Prüfsumme für Instanz B mit einem Abfragebefehl beim Dienstprogramm FCC-Serv nach und bekommt einen Rückgabewert 42 mit der passenden Prüfsumme. Auch die x-te Instanz X fragt über eine Abfrage 44 der Prüfsumme die passende Prüfsumme nach und bekommt eine Rückantwort 45.

## Patentansprüche

1. Verfahren zum Betreiben einer Steuerungs-Software (Soft-PLC) zur Steuerung eines Prozesses, wobei die Steuerungs-Software (Soft-PLC) innerhalb einer Laufzeit-Umgebung (FW) auf einem Rechnersystem (1) zum Ablauf gebracht wird, und ein Sicherheitsprogramm (F-Prog) zum Ablauf in der Steuerungs-Software (Soft-PLC) in einen Ladespeicher (10) geladen wird,
**dadurch gekennzeichnet, dass** eine Prüfsumme (FCC-con) des Programmcodes des Sicherheitsprogramms (F-Prog) in einem mit dem Rechnersystem (1) über ein Kommunikationsnetzwerk (2) verbundenen Netzwerkteilnehmer (3) abgelegt wird, wobei bei einem Hochlauf der Steuerungs-Software (Soft-PLC) in der Laufzeit-Umgebung (FW) über dem im Ladespeicher (10) abgelegten Programmcode des Sicherheitsprogramms (F-Prog) eine Ladespeicher-Prüfsumme (FCC-act) erzeugt wird,
weiterhin wird von dem Netzwerkteilnehmer (3) die zuvor abgelegte Prüfsumme (FCC-con) abgefragt und mit der Ladespeicher-Prüfsumme (FCC-act) verglichen, wobei bei einer Ungleichheit eine Abarbeitung des Sicherheitsprogramms (F-Prog) in der Steuerungs-Software (Soft-PLC) gestoppt wird.

2. Verfahren nach Anspruch 1, wobei von der Laufzeit-Umgebung (FW) auf dem Rechnersystem (1) oder auf weiteren Rechnersystemen (1') Instanzen (A,B) erzeugt werden, auf denen jeweils eine Steuerungs-Software (Soft-PLC-A, Soft-PLC-B) zur Steuerung eines Prozesses zum Ablauf gebracht werden, und jeweils ein Sicherheitsprogramm (F-Prog-A, F-Prog-B) zum Ablauf in der jeweiligen Steuerungs-Software (Soft-PLC-A, Soft-PLC-B) in einen der jeweiligen Instanz (A,B) zugeordneten Ladespeicher (10A,10B) geladen wird,
wobei ein Dienstprogramm (FCC-Serv) betrieben wird, welches eine Ablage der jeweiligen Prüfsummen (FCC-con-A, FCC-con-B) der jeweiligen Programmcodes der jeweiligen Sicherheitsprogramme (F-Prog-A, F-Prog-B) verwaltet, wobei bei einem Hochlauf der jeweiligen Steuerungs-Software (Soft-PLC-A, Soft-PLC-B) in der jeweiligen Instanz (A,B) über das Dienstprogramm (FCC-Serv) die jeweilige Prüfsumme (FCC-con-A, FCC-con-B) angefragt wird und in der jeweiligen Instanz (A,B) wird über den im zugehörigen Ladespeicher (10A,10B) abgelegten Programmcode des jeweiligen Sicherheitsprogramms (F-Prog-A, F-Prog-B) eine Ladespeicher-Prüfsumme (FCC-act-A, FCC-act-A) erzeugt, und mit der über das Dienstprogramm (FCC-Serv) abgefragten Prüfsummen (FCC-con-A, FCC-con-B) verglichen, wobei bei einer Ungleichheit eine Abarbeitung des jeweiligen Sicherheitsprogramms (F-Prog-A, F-Prog-B) in der jeweiligen Steuerungs-Software (Soft-PLC-A, Soft-PLC-B) gestoppt wird.

3. Verfahren nach Anspruch 2, wobei im Dienstprogramm (FCC-Serv) bei der Verwaltung von Prüfsummen (FCC-con-A, FCC-con-B) von mehreren Programmcodes der jeweiligen Sicherheitsprogramme (F-Prog-A, F-Prog-B) für die jeweilige Steuerungs-Software (Soft-PLC-A, Soft-PLC-B) eine eindeutige Identifikations-Nummer (ID) verwendet wird.

4. Verfahren nach einem der Ansprüche 1 bis 3, wobei die Prüfsumme (FCC-con) des Programmcodes des Sicherheitsprogramms (F-Prog) kopiert wird und eine Redundante Ablage eingerichtet wird und über das Kommunikationsnetzwerk (2) wird die Prüfsumme (FCC-con) bzw. eine Prüfsummen-Kopie (FCC'-con) auf unterschiedliche Netzwerkteilnehmer (3,4) abgelegt.

5. Verfahren nach einem der Ansprüche 1 bis 4, wobei das Rechnersystem (1) als eine multifunktionale Steuerungsplattform oder als ein Industrie-PCs oder als eine Edge-Computing-Plattform oder als eine Cloud-Computing-Plattform betrieben wird.

6. Verfahren nach einem der Ansprüche 1 bis 5, wobei ein Engineering-System (5) zum Herunterladen des Sicherheitsprogramms (F-Prog) mit dem Rechnersystem (1) verbunden wird und das Ablegen der Prüfsumme (FCC-con) des Programmcodes des Sicherheitsprogramms (F-Prog) entweder durch das Engineering-System (5) oder durch die Laufzeit-Umgebung (FW) durchgeführt wird.

7. Verfahren nach einem der Ansprüche 1 bis 6, wobei die Steuerungs-Software (Soft-PLC) mit dem Sicherheitsprogramm (F-Prog) zur Steuerung eines Prozesses, als eine auf funktionale Sicherheit ausgelegte Steuerung betrieben wird, und in der Steuerungs-Software (Soft-PLC) mit dem Sicherheitsprogramm (F-Prog) Sicherheitsbausteine betrieben werden, um die von der Steuerungs-Software (Soft-PLC) für die funktionale Sicherheit geforderten Abläufe zu gewährleisten.

8. Anordnung (100) aufweisend
- ein Rechnersystem (1) umfassend eine Laufzeit-Umgebung (FW) ausgestaltet eine Steuerungs-Software (Soft-PLC) zur Steuerung eines Prozesses ablaufen zu lassen,
- einen Ladespeicher (10) ausgestaltet ein Sicherheitsprogramm (F-Prog) zum Ablauf in der Steuerungs-Software (Soft-PLC) aufzunehmen,
- einen mit dem Rechnersystem (1) über ein Kommunikationsnetzwerk (2) verbundenen Netzwerkteilnehmer (3), welcher mit einem Speicherbereich (12) versehen ist, in welchem eine Prüfsumme (FCC-con) des Programmcodes des Sicherheitsprogramms (F-Prog) abgelegt ist,
- ein Programmidentifikations-Mittel (11), welches ausgestaltet ist bei einem Hochlauf der Steuerungs-Software (Soft-PLC) über dem im Ladespeicher (10) abgelegten Programmcode des Sicherheitsprogramms (F-Prog) eine Ladespeicher-Prüfsumme (FCC-act) zu erzeugen und die in dem Netzwerkteilnehmer (3) zuvor abgelegte Prüfsumme (FCC-con) abzufragen und mit der Ladespeicher-Prüfsumme (FCC-act) zu verglichen, weiterhin ausgestaltet bei einer Ungleichheit ein Fehlersignal auszugeben, welches eine Abarbeitung des Sicherheitsprogramms (F-Prog) in der Steuerungs-Software (Soft-PLC) stoppt.

9. Anordnung (100) nach Anspruch 8, aufweisend eine
- erste Instanz(A) von der Laufzeit-Umgebung (FW) auf dem Rechnersystem (1) und eine zweite Instanz(B) von der Laufzeit-Umgebung (FW) auf dem Rechnersystem (1) oder auf einem weiteren Rechnersystem,
- die Instanzen (A,B) sind ausgestaltet jeweils eine Steuerungs-Software (Soft-PLC-A, Soft-PLC-B) zur Steuerung eines Prozesses aufzunehmen, in denen wiederum jeweils ein Sicherheitsprogramm (F-Prog-A, F-Prog-B) ladbar ist, weiterhin aufweisend
- einen ersten Ladespeicher (10A) und einen zweiten Ladespeicher (10B) in denen die jeweilige Steuerungs-Software (Soft-PLC-A, Soft-PLC-B) geladen ist, wobei die Laufzeit-Umgebung (FW) bzw. dessen Instanzen (A,B) ausgestaltet ist/sind bei einem Hochlauf die Sicherheitsprogramme (F-Prog-A, F-Prog-B) in die Steuerungs-Software (Soft-PLC-A, Soft-PLC-B) zu laden, weiterhin aufweisend
- ein Dienstprogramm (FCC-Serv), welches ausgestaltet ist eine Ablage der jeweiligen Prüfsummen (FCC-con-A, FCC-con-B) der jeweiligen Programmcodes der jeweiligen Sicherheitsprogramme (F-Prog-A, F-Prog-B) zu verwalten, weiterhin ausgestaltet bei einem Hochlauf der jeweiligen Steuerungs-Software (Soft-PLC-A, Soft-PLC-B) in der jeweiligen Instanz (A,B) die jeweilige Prüfsumme (FCC-con-A, FCC-con-B) anzufragen,
- die jeweiligen Instanzen (A,B) sind ausgestaltet über den im zugehörigen Ladespeicher (10A,10B) abgelegten Programmcode des jeweiligen Sicherheitsprogramms (F-Prog-A, F-Prog-B) eine Ladespeicher-Prüfsumme (FCC-act-A, FCC-act-B) zu erzeugen, und mit der über das Dienstprogramm (FCC-Serv) abgefragten Prüfsumme (FCC-con-A, FCC-con-B) zu vergleichen, wobei bei einer Ungleichheit eine Abarbeitung des jeweiligen Sicherheitsprogramms (F-Prog-A, F-Prog-B) in der jeweiligen Steuerungs-Software (Soft-PLC-A, Soft-PLC-B) gestoppt wird.

10. Anordnung (100) nach Anspruch 9, wobei das Dienstprogramm (FCC-Serv) ausgestaltet ist bei der Verwaltung von Prüfsummen (FCC-con-A, FCC-con-B) von mehreren Programmcodes dem jeweiligen Sicherheitsprogramme (F-Prog-A, F-Prog-B) für die jeweilige Steuerungs-Software (Soft-PLC-A, Soft-PLC-B) eine eindeutige Identifikations-Nummer (ID)zuzuordnen.

11. Anordnung (100) nach einem der Ansprüche 8 bis 10, weiterhin aufweisend eine Redundante Ablage (13), in welche eine Prüfsummen-Kopie (FCC'-con) der Prüfsumme (FCC-con) des Programmcodes des Sicherheitsprogramms (F-Prog) ablegbar ist.

12. Anordnung (100) nach einem der Ansprüche 8 bis 11, wobei das Rechnersystem (1) als eine multifunktionale Steuerungsplattformen oder als ein Industrie-PCs oder als eine Edge-Computing-Plattform oder als eine Cloud-Computing-Plattform ausgestaltet ist.

13. Anordnung (100) nach einem der Ansprüche 8 bis 12, weiterhin aufweisend ein Engineering-System (5) ausgestaltet zum Herunterladen des Sicherheitsprogramms (F-Prog) und/oder zum Anlegen der Instanzen (A,B).

14. Anordnung (100) nach einem der Ansprüche 8 bis 13, wobei die Steuerungs-Software (Soft-PLC) mit dem Sicherheitsprogramm (F-Prog) zur Steuerung eines Prozesses, als eine auf funktionale Sicherheit ausgelegte Steuerung ausgestaltet ist und in der Steuerungs-Software (Soft-PLC) mit dem Sicherheitsprogramm (F-Prog) Sicherheitsbausteine vorhanden sind um die von der Steuerungs-Software (Soft-PLC) für die funktionale Sicherheit geforderten Abläufe zu gewährleisten.

## Claims

1. Method for operating control software (Soft-PLC) so as to control a process, wherein the control software (Soft-PLC) is run within a runtime environment (FW) on a computer system (1), and
a security program (F-Prog) is loaded into a load memory (10) so as to run in the control software (Soft-PLC),
**characterised in that** a checksum (FCC-con) of the program code of the security program (F-Prog) is stored in a network subscriber (3) that is connected to the computer system (1) via a communication network (2), wherein a load memory checksum (FCC-act) is generated during a startup of the control software (Soft-PLC) in the runtime environment (FW) via the program code of the security program (F-Prog), which is stored in the load memory (10),
furthermore, the previously stored checksum (FCC-con) is queried by the network subscriber (3) and compared with the load memory checksum (FCC-act), wherein, in the event of a discrepancy, execution of the security program (F-Prog) in the control software (Soft-PLC) is stopped.

2. Method according to claim 1, wherein instances (A, B) are generated by the runtime environment (FW) on the computer system (1) or on further computer systems (1'), on which control software (Soft-PLC-A, Soft-PLC-B) for controlling a process is run in each case, and a security program (F-Prog-A, F-Prog-B) is loaded in each case into a load memory (10A, 10B), which is allocated to the respective instance (A,B), so as to run in the respective control software (Soft-PLC-A, Soft-PLC-B),
wherein a utility (FCC-Serv) is operated, which manages a storage of the respective checksums (FCC-con-A, FCC-con-B) of the respective program codes of the respective security programs (F-Prog-A, F-Prog-B), wherein, during a startup of the respective control software (Soft-PLC-A, Soft-PLC-B), the respective checksum (FCC-con-A, FCC-con-B) is requested in the respective instance (A, B) via the utility (FCC-Serv), and a load memory checksum (FCC-act-A, FCC-act-A) is generated in the respective instance (A, B) via the program code of the respective security program (F-Prog-A, F-Prog-B), which is stored in the associated load memory (10A, 10B), and is compared with the checksums (FCC-con-A, FCC-con-B) that are queried via the utility (FCC-Serv), wherein, in the event of a discrepancy, execution of the respective security program (F-Prog-A, F-Prog-B) in the respective control software (Soft-PLC-A, Soft-PLC-B) is stopped.

3. Method according to claim 2, wherein a unique identification number (ID) is used in the utility (FCC-Serv) in the management of checksums (FCC-con-A, FCC-con-B) of a plurality of program codes of the respective security programs (F-Prog-A, F-Prog-B) for the respective control software (Soft-PLC-A, Soft-PLC-B).

4. Method according to one of claims 1 to 3, wherein the checksum (FCC-con) of the program code of the security program (F-Prog) is copied and a redundant storage is set up, and the checksum (FCC-con) or a checksum copy (FCC'-con) is stored on different network subscribers (3, 4) via the communication network (2).

5. Method according to one of claims 1 to 4, wherein the computer system (1) is operated as a multifunctional control platform or as an industrial PC or as an edge computing platform or as a cloud computing platform.

6. Method according to one of claims 1 to 5, wherein an engineering system (5) for downloading the security program (F-Prog) is connected to the computer system (1), and the checksum (FCC-con) of the program code of the security program (F-Prog) is stored either by the engineering system (5) or by the runtime environment (FW).

7. Method according to one of claims 1 to 6, wherein the control software (Soft-PLC) is operated with the security program (F-Prog) so as to control a process as a controller that is designed for functional security, and security modules are operated in the control software (Soft-PLC) having the security program (F-Prog) in order to ensure the processes that are required by the control software (Soft-PLC) for functional security.

8. Arrangement (100) having
- a computer system (1) comprising a runtime environment (FW) that is configured so as to run control software (Soft-PLC) so as to control a process,
- a load memory (10) that is configured so as to hold a security program (F-Prog) for running in the control software (Soft-PLC),
- a network subscriber (3) that is connected to the computer system (1) via a communication network (2) and that is provided with a storage area (12) in which a checksum (FCC-con) of the program code of the security program (F-Prog) is stored,
- a program identification means (11) that is configured so as to generate a load memory checksum (FCC-act) during a startup of the control software (Soft-PLC) via the program code of the security program (F-Prog), which is stored in the load memory (10), and to query the checksum (FCC-con) that is previously stored in the network subscriber (3) and to compare the checksum with the load memory checksum (FCC-act), furthermore configured so as to output an error signal that stops the security program (F-Prog) from being executed in the control software (Soft-PLC) in the event of a discrepancy.

9. Arrangement (100) according to claim 8, having a
- first instance(A) of the runtime environment (FW) on the computer system (1) and a second instance(B) of the runtime environment (FW) on the computer system (1) or on a further computer system,
- the instances (A,B) are configured so as to hold control software (Soft-PLC-A, Soft-PLC-B) for controlling a process, in which in turn in each case a security program (F-Prog-A, F-Prog-B) can be loaded, furthermore having
- a first load memory (10A) and a second load memory (10B) in which the respective control software (Soft-PLC-A, Soft-PLC-B) is loaded, wherein the runtime environment (FW) or its instances (A,B) is/are configured so as to load the security programs (F-Prog-A, F-Prog-B) into the control software (Soft-PLC-A, Soft-PLC-B) during a startup, furthermore having
- a utility (FCC-Serv) which
is configured so as to manage a storage of the respective checksums (FCC-con-A, FCC-con-B) of the respective program codes of the respective security programs (F-Prog-A, F-Prog-B), furthermore configured so as to request the respective checksum (FCC-con-A, FCC-con-B) during a startup of the respective control software (Soft-PLC-A, Soft-PLC-B) in the respective instance (A, B),
- the respective instances (A,B) are configured so as to generate a load memory checksum (FCC-act-A, FCC-act-B) via the program code of the respective security program (F-Prog-A, F-Prog-B), which is stored in the associated load memory (10A, 10B), and to compare the load memory checksum with the checksum (FCC-con-A, FCC-con-B) that is queried via the utility (FCC-Serv), wherein, in the event of a discrepancy, execution of the respective security program (F-Prog-A, F-Prog-B) in the respective control software (Soft-PLC-A, Soft-PLC-B) is stopped.

10. Arrangement (100) according to claim 9, wherein the utility (FCC-Serv) is designed so as to allocate a unique identification number (ID) to the respective security programs (F-Prog-A, F-Prog-B) for the respective control software (Soft-PLC-A, Soft-PLC-B) during the management of checksums (FCC-con-A, FCC-con-B) of a plurality of program codes.

11. Arrangement (100) according to one of claims 8 to 10, furthermore having a redundant storage (13) in which a checksum copy (FCC'-con) of the checksum (FCC-con) of the program code of the security program (F-Prog) can be stored.

12. Arrangement (100) according to one of claims 8 to 11, wherein the computer system (1) is designed as a multifunctional control platform or as an industrial PC or as an edge computing platform or as a cloud computing platform.

13. Arrangement (100) according to one of claims 8 to 12, furthermore having an engineering system (5) that is configured so as to download the security program (F-Prog) and/or to create the instances (A,B).

14. Arrangement (100) according to one of claims 8 to 13, wherein the control software (Soft-PLC) is designed with the security program (F-Prog) so as to control a process as a controller that is designed for functional security, and security modules are present in the control software (Soft-PLC) having the security program (F-Prog) in order to ensure the processes that are required by the control software (Soft-PLC) for functional security.

## Revendications

1. Procédé pour faire fonctionner un logiciel (Soft-PLC) de commande pour la commande d'un processus, dans lequel on met, dans un environnement (FW) de temps de marche, le logiciel (Soft-PLC) de commande en déroulement sur un système (1) informatique, et on charge un programme (F-Prog) de sécurisation pour le déroulement dans le logiciel (Soft-PLC) de commande dans une mémoire (10) de charge,
**caractérisé en ce que** l'on archive une somme (FCC-con) de contrôle du code du programme (F-Prog) de sécurisation dans un participant (3) à un réseau relié au système (1) informatique par un réseau (2) de communication, dans lequel, lors d'un démarrage du logiciel (Soft-PLC) de commande dans l'environnement (FW) de temps de marche, on produit une somme (FCC-act) de contrôle de mémoire de charge par le code, archivé dans la mémoire (10) de charge, du programme (F-Prog) de sécurisation,
on interroge en outre, par le participant (3) au programme, la somme (FCC-con) de contrôle archivée auparavant et on la compare à la somme (FCC-act) de contrôle de mémoire de charge, dans lequel, s'il y a inégalité, on arrête l'élaboration du programme (F-Prog) de sécurisation dans le logiciel (Soft-PLC) de commande.

2. Procédé suivant la revendication 1, dans lequel on produit, par l'environnement (FW) de temps de marche, sur le système (1) informatique ou sur d'autres systèmes (1') informatiques des instances (A, B), sur lesquelles on met en déroulement respectivement un logiciel (Soft-PLC-A, Soft-PLC-B) de commande pour la commande d'un processus, et on charge, dans une mémoire (10A, 10B) de charge affectée à l'instance (A, B) respective, respectivement un programme (F-Prog-A, F-Prog-B) de sécurisation, pour le déroulement dans le logiciel (Soft-PLC-A, Soft-PLC-B) de commande respectif,
dans lequel on fait fonctionner un programme (FCC-Serv) de service, qui gère un archivage des sommes (FCC-con-A, FCC-con-B) de contrôle respectives du code respectif des programmes (F-Prog-A, F-Prog-B) de sécurisation respectifs, dans lequel, lors d'un démarrage du logiciel (Soft-PLC-A, Soft-PLC-B) de commande respectif dans l'instance (A, B) respective, on demande, par le programme (FCC-Serv) de service, la somme (FCC-con-A, FCC-con-B) de contrôle respective et, dans l'instance (A, B) respective, on produit, par le code, archivé dans la mémoire (10A, 10B) de charge qui lui appartient, du programme (F-Prog-A, F-Prog-B) de sécurisation respectif, une somme (FCC-act-A, FCC-act-A) de contrôle de mémoire de charge, et on la compare aux sommes (FCC-con-A, FCC-con-B) de contrôle, archivées par le programme (FCC-Serv) de service, dans lequel, s'il y a inégalité, on arrête l'élaboration du programme (F-Prog-A, F-Prog-B) de sécurisation respectif dans le logiciel (Soft-PLC-A, Soft-PLC-B) de commande respectif.

3. Procédé suivant la revendication 2, dans lequel on utilise, dans le programme (FCC-Serv) de service, lors de la gestion de sommes (FCC-con-A, FCC-con-B) de contrôle de plusieurs codes des programmes (F-Prog-A, F-Prog-B) de sécurisation respectifs, un numéro (ID) d'identification univoque pour le logiciel (Soft-PLC-A, Soft-PLC-B) de commande respectif.

4. Procédé suivant l'une des revendications 1 à 3, dans lequel on copie la somme (FCC-con) de contrôle du code du programme (F-Prog) de sécurisation et on agence un archivage redondant et, par le réseau (2) de communication, on archive la somme (FCC-con) de contrôle ou une copie (FCC'-con) de la somme de contrôle sur des participants (3, 4) différents au réseau.

5. Procédé suivant l'une des revendications 1 à 4, dans lequel on fait fonctionner le système (1) informatique sous la forme d'une plateforme de commande multifonctionnelle ou sous la forme d'un PC industriel ou sous la forme d'une plateforme de calcul périphérique ou sous la forme d'une plateforme de calcul à nuage.

6. Procédé suivant l'une des revendications 1 à 5, dans lequel on raccorde, au système (1) informatique, un système (5) d'ingénierie pour y charger le programme (F-Prog) de sécurisation et on effectue l'archivage de la somme (FCC-con) de contrôle du code du programme (F-Prog) de sécurisation, soit par le système (5) d'ingénierie, soit par l'environnement (FW) de temps de marche.

7. Procédé suivant l'une des revendications 1 à 6, dans lequel on fait fonctionner le logiciel (Soft-PLC) de commande, par le programme (F-Prog) de sécurisation pour la commande d'un processus, sous la forme d'une commande conçue pour la sécurisation fonctionnelle et, dans le logiciel (Soft-PLC) de commande, on fait fonctionner, par le programme (F-Prog) de sécurisation, des modules de sécurisation, afin d'assurer les déroulements exigés par le logiciel (Soft-PLC) de commande pour la sécurisation fonctionnelle.

8. Agencement (100) comportant
- un système (1) informatique comprenant un environnement (FW) de temps de marche équipé d'un logiciel (Soft-PLC) de commande pour faire se dérouler la commande d'un processus,
- une mémoire (10) de charge conformée pour recevoir un programme (F-Prog) de sécurisation pour le déroulement du logiciel (Soft-PLC) de commande,
- un participant (3) au réseau raccordé au système (1) informatique par un réseau (2) de communication et pourvu d'une partie (12) de mémoire, dans laquelle une somme (FCC-con) de contrôle du code du programme (F-Prog) de sécurisation est archivée,
- un moyen (11) d'identification de programme, qui est conformé pour, lors d'un démarrage du logiciel (Soft-PLC) de commande par le code, archiver, dans la mémoire (10) de charge du programme (F-Prog) de sécurisation, une somme (FCC-act) de contrôle de mémoire de charge, demander la somme (FCC-con) de contrôle archivée auparavant dans le participant (3) au réseau et la comparer à la somme (FCC-act) de contrôle de mémoire de charge, conformé en outre, s'il y a inégalité, pour émettre un signal d'erreur, qui arrête une élaboration du programme (F-Prog) de sécurité dans le logiciel (Soft-PLC) de commande.

9. Agencement (100) suivant la revendication 8, comportant
- une première instance (A) de l'environnement (FW) de temps de marche sur le système (1) informatique et une deuxième instance (B) de l'environnement (FW) de temps de marche sur le système (1) informatique ou sur un autre système informatique,
- les instances (A, B) sont conformées chacune pour recevoir respectivement un logiciel (Soft-PLC-A, Soft-PLC-B) de commande pour la commande, dans lesquels à nouveau respectivement un programme (F-Prog-A, F-Prog-B) de sécurisation peut être chargé, comportant en outre
- une première mémoire (10A) de charge et une deuxième mémoire (10B) de charge, dans lesquelles les logiciels (Soft-PLC-A, Soft-PLC-B) de commande respectifs sont chargés, dans lequel l'environnement (FW) de temps de marche ou ses instances (A, B) est/sont conformé(es) pour, lors d'un démarrage, charger les programmes (F-Prog-A, F-Prog-B) de sécurisation dans le logiciel (Soft-PLC-A, Soft-PLC-B) de commande, comportant en outre
- un programme (FCC-Serv) de service, qui est conformé pour gérer un archivage des sommes (FCC-con-A, FCC-con-B) de contrôle respectif des codes respectifs des programmes (F-Prog-A, F-Prog-B) de sécurisation respectifs, conformé en outre pour, lors d'un démarrage des logiciels (Soft-PLC-A, Soft-PLC-B) de commande respectifs dans les instances (A, B) respectives, demander les sommes (FCC-con-A, FCC-con-B) de contrôle respectives,
- les instances (A, B) respectives sont conformées pour, par le code, archivé dans la mémoire (10A, 10B) de charge qui lui appartient, du programme (F-Prog-A, F-Prog-B) de sécurisation respectif, produire une somme (FCC-act-A, FCC-act-B) de contrôle de mémoire de charge et la comparer à la somme (FCC-con-A, FCC-con-B) de contrôle demandée par le programme (FCC-Serv) de service, dans lequel, s'il y a inégalité, une élaboration du programme (F-Prog-A, F-Prog-B) de sécurisation respectif dans le logiciel (Soft-PLC-A, Soft-PLC-B) de commande respectif est arrêtée.

10. Agencement (100) suivant la revendication 9, dans lequel le programme (FCC-Serv) de service est conformé pour affecter, lors de la gestion de sommes (FCC-con-A, FCC-con-B) de plusieurs codes de programme, un numéro (ID) d'identification univoque au programme (F-Prog-A, F-Prog-B) de sécurisation respectif pour le logiciel (Soft-PLC-A, Soft-PLC-B) de commande respectif.

11. Agencement (100) suivant l'une des revendications 8 à 10, comportant en outre un archivage (13) redondant, dans lequel une copie (FCC'-con) de la somme (FCC-con) de contrôle du code du programme (F-Prog) de sécurisation peut être archivée.

12. Agencement (100) suivant l'une des revendications 8 à 11, dans lequel on fait fonctionner le système (1) informatique sous la forme d'une plateforme de commande multifonctionnelle ou sous la forme d'un PC industriel ou sous la forme d'une plateforme de calcul périphérique ou sous la forme d'une plateforme de calcul à nuage.

13. Agencement (100) suivant l'une des revendications 8 à 12, comportant en outre un système (5) d'ingénierie conformé pour charger le programme (F-Prog) de sécurisation et/ou créer les instances (A, B).

14. Agencement (100) suivant l'une des revendications 8 à 13, dans lequel le logiciel (Soft-PLC) de commande ayant le programme (F-Prog) de sécurisation pour la commande d'un processus est conformé sous la forme d'une commande conçue sur la sécurité fonctionnelle et il y a, dans le logiciel (Soft-PLC) de commande ayant le programme (F-Prog) de sécurisation, des modules de sécurisation pour assurer, par le logiciel (Soft-PLC) de commande, des déroulements exigés pour la sécurisation fonctionnelle.
